(19) Europäisches Patentamt
European Patent Office
Office européen des brevets

(11) EP 3 247 636 B1

(12) **FASCICULE DE BREVET EUROPEEN**

(45) Date de publication et mention de la délivrance du brevet:
**12.06.2019 Bulletin 2019/24**

(21) Numéro de dépôt: **16705566.4**

(22) Date de dépôt: **20.01.2016**

(51) Int Cl.:
***B64D 33/04*** (2006.01) ***C08G 8/04*** (2006.01)
***C08J 5/24*** (2006.01)

(86) Numéro de dépôt international:
**PCT/FR2016/050104**

(87) Numéro de publication internationale:
**WO 2016/116697 (28.07.2016 Gazette 2016/30)**

(54) **PROCÉDÉ DE FABRICATION D'UNE RÉSINE ABLATIVE**

VERFAHREN ZUR HERSTELLUNG EINES ABLATIVEN HARZES

METHOD FOR PRODUCING AN ABLATIVE RESIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.01.2015 FR 1500127**

(43) Date de publication de la demande:
**29.11.2017 Bulletin 2017/48**

(73) Titulaires:
- **ArianeGroup SAS**
  **75015 Paris (FR)**
- **Centre National de la Recherche Scientifique**
  **75016 Paris (FR)**

(72) Inventeurs:
- **FOYER, Gabriel M.**
  **33000 Bordeaux (FR)**
- **NEGRELL-GUIRAO, Claire F.**
  **34130 Lansargues (FR)**
- **CAILLOL, Sylvain Y.**
  **34090 Montpellier (FR)**
- **DAVID, Ghislain C.**
  **34080 Montpellier (FR)**
- **RODRIGUEZ, Nadia**
  **33800 Bordeaux (FR)**

(74) Mandataire: **Laïk, Eric et al**
**Cabinet Beau de Loménie**
**158, rue de l'Université**
**75340 Paris Cedex 07 (FR)**

(56) Documents cités:
**EP-A2- 0 274 075 FR-A- 673 379**
**FR-A1- 2 432 010 FR-A1- 2 760 760**
**GB-A- 1 539 733 JP-A- H07 258 364**

- **Katsoulidis A P; Kanatzidis M G: "Phloroglucinol based microporous polymeric organic frameworks with-OH functional groups and high CO2 capture capacity", Chemistry of Materials, vol. 23, no. 7 12 avril 2011 (2011-04-12), pages 1818-1824, XP002755764, DOI: 10.1021/cm103206x Extrait de l'Internet: URL:http://pubs.acs.org/doi/pdf/10.1021/cm 103206x [extrait le 2016-03-22]**
- **PARK J K ET AL: "Thermal and ablative properties of low temperature carbon fiber-phenol formaldehyde resin composites", CARBON, ELSEVIER, OXFORD, GB, vol. 40, no. 12, 1 janvier 2002 (2002-01-01), pages 2125-2134, XP004379499, ISSN: 0008-6223, DOI: 10.1016/S0008-6223(02)00063-5**
- **FOYER G ET AL: "New method for the synthesis of formaldehyde-free phenolic resins from lignin-based aldehyde precursors", EUROPEAN POLYMER JOURNAL, vol. 74, 30 novembre 2015 (2015-11-30), pages 296-309, XP029350113, ISSN: 0014-3057, DOI: 10.1016/J.EURPOLYMJ.2015.11.036**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Arrière-plan de l'invention

L'invention concerne un nouveau procédé de fabrication d'une tuyère de propulseur à partir d'une résine phénolique.

Il est connu de réaliser des tuyères de propulseurs à partir de résines phénoliques de type résole, par exemple à partir de résine ablative telle que la résine Ablaphène RS101. Les résines phénoliques utilisées pour cette application doivent présenter d'excellentes propriétés de stabilité thermique et de charbonnement.

Les résines phénoliques telles que la résine Ablaphène RS101 sont synthétisées à partir de formaldéhyde et de phénol. Il est connu que le formaldéhyde est très réactif vis-à-vis du phénol. Les résines phénoliques synthétisées à partir de ces deux composés présentent de hautes densités aromatiques et de hautes densités de réticulation, lesquelles confèrent aux résines les propriétés de stabilité thermique et de charbonnement recherchées.

Toutefois le formaldéhyde et le phénol sont des composés classés Cancérigène Mutagène Reprotoxique (CMR) de catégorie 1B et 2 respectivement.

Du fait de sa toxicité, le formaldéhyde est un composé chimique dont l'utilisation devient strictement réglementée par la législation CMR. De plus, le formaldéhyde est un composé chimique issu de ressources fossiles épuisables.

Plusieurs travaux de synthèse de résines phénoliques à partir de composés aldéhyde issus de ressources renouvelables et sans formaldéhyde ont été menés. Le formaldéhyde est alors substitué par des composés aldéhyde tels que le glyoxal [E.C. Ramires, J.D. Megiatto, C. Gardrat, A. Castellan, E. Frollini, Biobased composites from glyoxal-phenolic resins and sisal fibers, Bioresour. Technol., 101 (2010) 1998-2006.] ou le furfural [L.H. Brown, Resin-forming reactions of furfural and phenol, J. Ind. Eng. Chem., 44 (1952) 2673-2675.] par exemple. Ces composés sont moins réactifs que le formaldéhyde et peuvent conduire à l'obtention de résines phénoliques présentant des propriétés de stabilité thermique et de charbonnement insuffisantes pour la réalisation de pièces aéronautiques comme des tuyères de propulseurs. De plus, ces composés, bien que moins toxiques que le formaldéhyde, sont néanmoins classés CMR 2.

Il existe donc un besoin pour disposer d'une nouvelle voie de synthèse de résines phénoliques permettant de s'affranchir de l'utilisation du formaldéhyde ou d'autres composés aldéhyde classés CMR.

Il existe aussi un besoin pour disposer d'une nouvelle voie de synthèse de résines phénoliques présentant des propriétés de stabilité thermique et de charbonnement adaptées à la réalisation de pièces aéronautiques comme des tuyères de propulseurs.

### Objet et résumé de l'invention

A cet effet, l'invention propose, selon un premier aspect, un procédé de fabrication d'une tuyère de propulseur selon la revendication 1.

$n_2$ est par exemple compris entre 1 et 5 dans les formules A et B indiquées à la revendication 1.

Par composé phénolique, il faut comprendre une molécule organique comprenant au moins un noyau benzénique auquel est rattaché au moins un groupement hydroxyle (-OH).

Durant l'étape de pré-polymérisation, il y a addition du composé phénolique sur le composé aldéhyde aromatique afin de former des produits d'addition lesquels vont subir une condensation afin d'obtenir la résine phénolique. L'étape a) aboutit à une résine phénolique qui constitue un pré-polymère dans la mesure où celle-ci présente des groupes réactifs lui permettant de participer à une réaction de réticulation ultérieure.

L'invention permet avantageusement de s'affranchir de l'utilisation de formaldéhyde pour la fabrication d'une tuyère de propulseur à partir d'une résine phénolique en proposant une nouvelle méthode d'obtention d'une tuyère de propulseur à partir de composés aldéhyde aromatiques innovants pour cette application.

Comme il sera détaillé plus bas, le composé aldéhyde aromatique mis en oeuvre lors de l'étape a) peut avantageusement présenter une faible toxicité et être produit à partir de ressources renouvelables.

Comme évoqué plus haut, il est possible de réticuler entre elles différentes résines phénoliques obtenues par mise en oeuvre de l'étape a) afin d'obtenir un produit présentant une masse moléculaire élevée.

La tuyère peut être fabriquée à partir d'une résine phénolique obtenue par mise en oeuvre de l'étape de pré-polymérisation ou à partir d'une résine phénolique réticulée obtenue après mise en oeuvre d'une étape b) durant laquelle un traitement thermique est effectué de manière à réticuler des résines phénoliques obtenues par mise en oeuvre de l'étape de pré-polymérisation.

Le composé aldéhyde aromatique mis en oeuvre lors de l'étape a) est polyfonctionnel et est, par exemple, un composé polyaldéhyde aromatique (i.e. un composé aldéhyde aromatique présentant plusieurs fonctions aldéhyde). Le caractère polyfonctionnel et aromatique d'un tel composé aldéhyde aromatique permet avantageusement d'obtenir après l'étape b) de réticulation une résine présentant une haute densité de réticulation ainsi qu'une haute densité aromatique. Ainsi, la mise en oeuvre d'un tel composé aldéhyde aromatique permet avantageusement d'obtenir après

l'étape b) une résine phénolique réticulée dont les propriétés applicatives et les propriétés de stabilité thermique et de charbonnement sont similaires, voire supérieures, à celles de la résine Ablaphène RS101.

Dans le cas où $R_2$ désigne un radical de formule A1 dans la formule A indiquée à la revendication 1, il faut comprendre que le composé A présente la formule suivante :

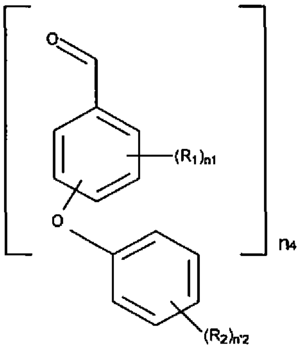

où $n_4$ est un entier compris entre 2 et 6 et $n'_2$ est un entier compris entre 0 et $6-n_4$ avec $n'_2 = n_2 - (n_4 - 1)$ et avec $R_1$, $R_2$, $n_1$ et $n_2$ tels que définis à la revendication 1. Il sera avantageux d'utiliser lors de l'étape a) un tel composé polyaldéhyde aromatique car il permettra d'obtenir des résines phénoliques avec de hauts degrés de réticulation et de hautes densités aromatiques après l'étape b). Cela confèrera aux résines formées d'excellentes propriétés de stabilité thermique et de charbonnement. De plus, du fait de sa masse molaire supérieure, un tel composé polyaldéhyde aromatique présentera une volatilité et une toxicité fortement diminuée par rapport au formaldéhyde.

Dans le cas où $R_2$ désigne un radical de formule B1 dans la formule B indiquée à la revendication 1, il faut comprendre que le composé B présente la formule suivante :

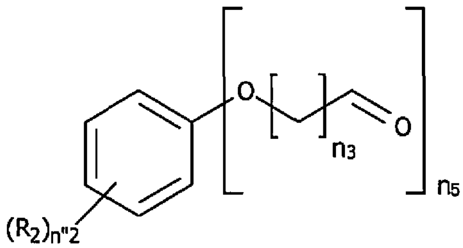

où $n_5$ est un entier compris entre 2 et 6 et $n''_2$ est un entier compris entre 0 et $6-n_5$ avec $n''_2 = n_2 - (n_5 - 1)$ et avec $R_2$, $n_2$ et $n_3$ tels que définis à la revendication 1. Il sera avantageux d'utiliser lors de l'étape a) un tel composé polyaldéhyde aromatique car il permettra d'obtenir des résines phénoliques avec de hautes densités de réticulation et de hautes densités aromatiques après l'étape b). Cela confèrera aux résines formées d'excellentes propriétés de stabilité thermique et de charbonnement. De plus, du fait de sa masse moléculaire supérieure, un tel composé polyaldéhyde aromatique présentera une volatilité et une toxicité fortement diminuée par rapport au formaldéhyde.

Dans le cas où $R_1$ désigne un radical de formule A2 dans la formule A indiquée à la revendication 1, il faut comprendre que le composé A présente la formule suivante :

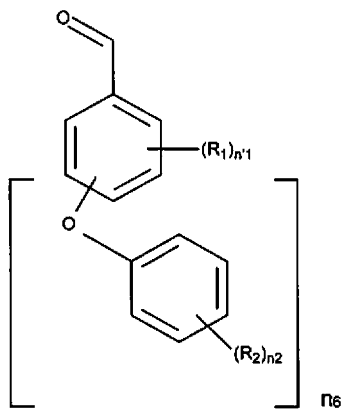

où $n_6$ est un entier compris entre 2 et 5 et $n'_1$ est un entier compris entre 0 et $5-n_6$ avec $n'_1 = n_1 - (n_6 - 1)$ et avec $R_1$, $R_2$, $n_1$ et $n_2$ tels que définis à la revendication 1.

Dans un exemple de réalisation, le composé aldéhyde aromatique mis en oeuvre lors de l'étape a) peut présenter la formule A et le procédé peut, en outre, comporter avant l'étape a) une étape de fabrication dudit composé aldéhyde aromatique par réaction de substitution nucléophile aromatique entre un composé ayant la formule A3 et un composé ayant la formule A4 où X désigne un groupe partant, les formules A3 et A4 étant les suivantes :

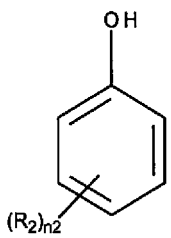

A3

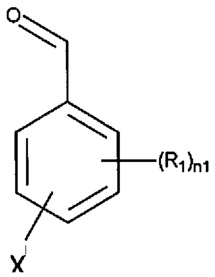

A4

.

Dans les formules A3 et A4, $R_1$, $R_2$, $n_1$ et $n_2$ sont tels que définis à la revendication 1.

Le groupe partant X peut par exemple être un atome d'halogène ou un groupement nitro $-NO_2$, le groupe partant étant de préférence un atome d'halogène.

En variante, le composé aldéhyde aromatique mis en oeuvre lors de l'étape a) peut présenter la formule B et le procédé peut, en outre, comporter avant l'étape a) les deux étapes suivantes :

1) une réaction de substitution nucléophile entre un composé de formule A3 et un composé de formule B2 afin d'obtenir un composé de formule B3, où Z est un groupement protecteur permettant d'obtenir une fonction aldéhyde après déprotection et Y est un groupe partant, et
2) une réaction de déprotection du composé de formule B3 afin d'obtenir le composé aldéhyde aromatique de formule B,

les formules A3, B2, B3 étant les suivantes :

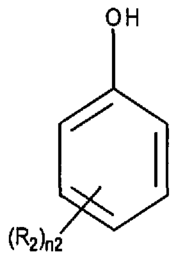

A3

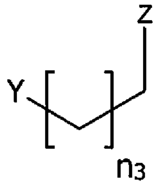

B2

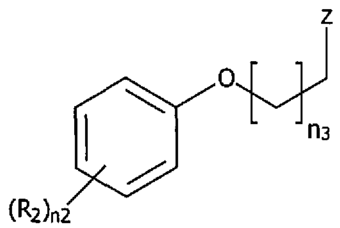

B3

Dans les formules A3, B2 et B3, $R_2$, $n_2$ et $n_3$ sont tels que définis à la revendication 1. Le groupe partant Y peut par exemple être un atome d'halogène.

Le groupement Z peut par exemple être un groupement acétal, dans ce cas le composé B3 présente la formule suivante :

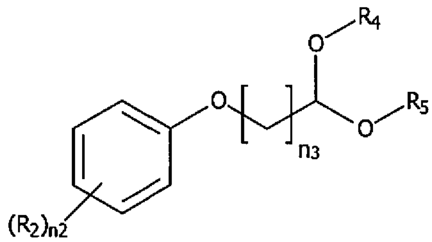

où $R_4$ et $R_5$ sont des chaînes hydrocarbonées en $C_1$ à $C_8$ formant éventuellement un cycle. En variante, le groupement Z peut être une fonction imine.

De préférence, les substituants $R_1$ et $R_2$ peuvent être choisis indépendamment l'un de l'autre parmi : -OH, -CHO, les groupements -O-Alk où Alk désigne une chaîne alkyle substituée ou non substituée de 1 à 4 atomes de carbone, de préférence -OMe, -COOH, les groupements aryles substitués ou non substitués et présentant éventuellement une ou plusieurs fonctions carbonyle ou acide carboxylique, $R_2$ pouvant en outre désigner un radical de formule A1 dans la formule A indiquée à la revendication 1 ou un radical de formule B1 dans la formule B indiquée à la revendication 1 et $R_1$ pouvant en outre désigner un radical de formule A2 dans la formule A indiquée à la revendication 1, dans les formules A1, A2 et B1, $R_1$ et $R_2$ sont tels que définis plus haut dans ce paragraphe. Dans les formules A1, A2 et B1, $n_1$, $n_2$ et $n_3$ sont tels que définis à la revendication 1.

De préférence encore, les substituants $R_1$ et $R_2$ sont choisis indépendamment l'un de l'autre parmi : -OH, -CHO, -OMe où Me désigne un groupement méthyle, les groupements aryles substitués ou non substitués et présentant éventuellement une ou plusieurs fonctions carbonyle ou acide carboxylique.

De préférence, $n_1$ peut être compris entre 0 et 2 et $n_2$ peut être compris entre 0 et 3 pour la formule A. Dans cet exemple de réalisation, $n_1$ peut de préférence être égal à 0.

De préférence, $n_2$ peut être compris entre 0 et 3 et $n_3$ peut être compris entre 1 et 3 pour la formule B.

De préférence, le composé de formule A3 mis en oeuvre pour fabriquer le composé aldéhyde aromatique peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les alcools hydroxycinnamyliques, les acides hydroxycinnamiques, les phénylpropènes, les coumarines, les naphtoquinones, les stilbénoïdes, les flavonoïdes, les iso-flavonoïdes, les anthocyanes, les lignanes, les lignines, les tanins condensés, les tanins hydrolysables, les tanins dépolymérisés et les résines résoles et novolaques.

De préférence encore, le composé de formule A3 mis en oeuvre pour fabriquer le composé aldéhyde aromatique peut être choisi parmi : les phénols simples, les composés polyphénoliques, par exemple les composés diphénoliques, les aldéhydes hydroxybenzoïques, les acides hydroxybenzoïques, les alcools hydroxybenzyliques, les résines résoles et novolaques.

De manière particulièrement préférée, le composé de formule A3 mis en oeuvre pour fabriquer le composé aldéhyde aromatique peut être choisi parmi : les phénols simples, par exemple le phénol, le résorcinol ou le phloroglucinol, et les aldéhydes hydroxybenzoïques, par exemple le para-hydroxybenzaldéhyde, la vanilline ou le syringaldéhyde.

Par exemple, le composé de formule A3 mis en oeuvre pour fabriquer le composé aldéhyde aromatique peut

être choisi parmi : le phénol, le pyrocatéchol, le résorcinol, l'hydroquinone, le phloroglucinol, le pyrogallol, le guaiacol, le syringol, le bis-phénol A, le bis-phénol S, le para-hydroxybenzaldéhyde, la vanilline, le syringaldéhyde, la déhydrodivanilline, l'alcool 2-hydroxybenzylique, l'alcool 4-hydroxybenzylique, l'alcool vanillique, l'alcool syringique, l'alcool paracoumarylique, l'alcool coniférylique, l'alcool sinapylique, l'acide férulique, l'acide parahydroxybenzoïque, l'acide gallique, l'acide paracoumarique, l'eugénol, l'isoeugénol, les cardanols, les cardols, les acides anacardiques, la catéchine, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques. Par exemple, le composé de formule A3 mis en oeuvre pour fabriquer le composé aldéhyde aromatique peut être choisi parmi : le phénol, le résorcinol, le phloroglucinol, l'hydroquinone, l'alcool 2-hydroxybenzylique, l'alcool 4-hydroxybenzylique, l'alcool vanillique, l'alcool syringique, le bis-phénol A, le bis-phénol S, le para-hydroxybenzaldéhyde, la vanilline, le syringaldéhyde, les résines résoles et novolaques.

De tels exemples de composés A3 peuvent être produits à partir de ressources renouvelables et peuvent avantageusement être mis en oeuvre dans le cadre de l'invention.

Dans un exemple de réalisation, le composé phénolique peut être choisi parmi : les phénols simples et les composés polyphénoliques, par exemple les composés diphénoliques, les phénols et composés polyphénoliques pouvant éventuellement être substitués par des groupements alcoxyles par exemple.

Le composé phénolique peut, par exemple, être choisi parmi : le phénol, le pyrocatéchol, le résorcinol, l'hydroquinone, le phloroglucinol, le pyrogallol, le guaiacol, le syringol, le bis-phénol A, le bis-phénol S, le para-hydroxybenzaldéhyde, la vanilline, le syringaldéhyde, la déhydrodivanilline, l'alcool 2-hydroxybenzylique, l'alcool 4-hydroxybenzylique, l'alcool vanillique, l'alcool syringique, l'alcool paracoumarylique, l'alcool coniférylique, l'alcool sinapylique, l'acide férulique, l'acide parahydroxybenzoïque, l'acide gallique, l'acide paracoumarique, l'eugénol, l'isoeugénol, les cardanols, les cardols, les acides anacardiques, la catéchine, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques. Le composé phénolique peut, par exemple, être choisi parmi : le phénol, le résorcinol, l'hydroquinone, le phloroglucinol, l'alcool 2-hydroxybenzylique, l'alcool 4-hydroxybenzylique, l'alcool vanillique, l'alcool syringique, le bis-phénol A, le bis-phénol S, le para-hydroxybenzaldéhyde, la vanilline, les résines résoles et novolaques, les procyanidines et les tanins condensés.

De tels exemples de composés phénoliques peuvent être produits à partir de ressources renouvelables et peuvent avantageusement être mis en oeuvre dans le cadre de l'invention.

Dans un exemple de réalisation, un composé aldéhyde aromatique de formule A5 ou A6 peut être mis en oeuvre durant l'étape a), les formules A5 et A6 étant les suivantes :

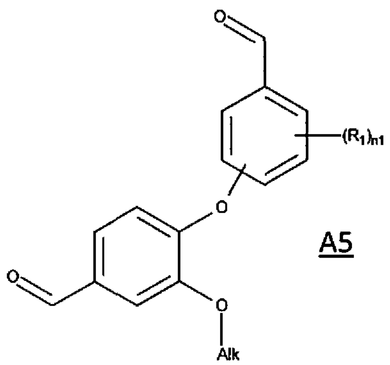

A5

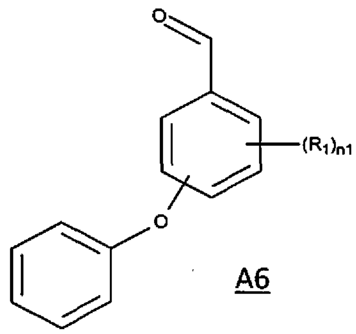

A6

où $R_1$ et $n_1$ sont tels que définis à la revendication 1 et Alk désigne une chaîne alkyle substituée ou non substituée de 1 à 4 atomes de carbone.

Dans un exemple de réalisation, un composé aldéhyde aromatique de formule B4 ou B5 peut être mis en oeuvre durant l'étape a), les formules B4 et B5 étant les suivantes :

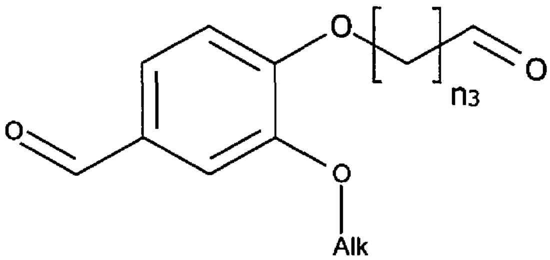

B4

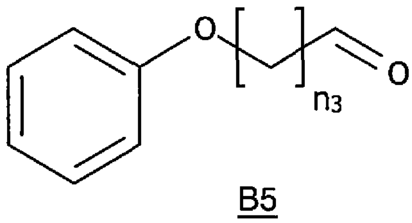

B5

où $n_3$ est tel que défini à la revendication 1 et Alk désigne une chaîne alkyle substituée ou non substituée de 1 à 4 atomes de carbone.

La tuyère de propulseur peut être en matériau composite. Dans ce cas, la fabrication de la tuyère peut comporter une première étape de formation d'une préforme fibreuse de la tuyère à obtenir imprégnée par une ou plusieurs résines phénoliques pré-polymérisées obtenues comme décrit plus haut. Cette fabrication peut en outre comporter une deuxième étape de cuisson de la préforme fibreuse imprégnée de manière à réticuler la ou les résines phénoliques pré-polymérisées et obtenir la tuyère de propulseur.

La préforme fibreuse peut par exemple comporter des fibres de carbone, de silice, de verre ou d'un matériau céramique, par exemple de carbure de silicium. La préforme fibreuse destinée à former le renfort fibreux de la tuyère peut être formée de diverses manières (drapage de couches de tissu pré-imprégnées par la ou les résines phénoliques pré-polymérisées, par exemple).

## Brève description des dessins

D'autres caractéristiques et avantages de l'invention ressortiront de la description suivante en référence aux dessins annexés, sur lesquels :

- les figures 1 et 2 représentent des résultats d'analyses thermogravimétriques comparant les propriétés de résines obtenues par un procédé selon l'invention et de la résine Ablaphène RS 101.

## Exemples

*Exemple 1 : greffage de fonctions aldéhyde aromatiques (synthèse de 4-phénoxybenzaldéhyde et application de ce dernier en synthèse de résine phénolique sans formaldéhyde - hors invention)*

Le phénol (5 g, 1 éq., 53 mmol), le 4-fluorobenzaldéhyde (5,4 g, 0,82 éq., 43,5 mmol), le carbonate de potassium (14,68 g, 2 éq., 106 mmol) et 50 mL de N,N-diméthylformamide sont placés dans un ballon de 100 mL muni d'un réfrigérant sous agitation magnétique et atmosphère d'argon. Le ballon est plongé dans un bain d'huile thermostaté à 110°C pendant 15 heures. A l'issue des 15 heures de réaction, une analyse RMN $^1H$ du brut réactionnel indique que la conversion du 4-fluorobenzaldéhyde en 4-phénoxybenzaldéhyde est totale. Le milieu réactionnel est filtré sur papier filtre, le filtrat est récupéré puis distillé sous pression réduite afin de retirer le DMF. Le produit est purifié par extraction liquide-liquide avec AcOEt/$H_2O$. Les phases organiques sont récupérées et lavées trois fois avec une solution d'hydroxyde de sodium concentrée à 1 mol/L. Ces lavages ont pour but de retirer le phénol et le DMF résiduels. Les phases organiques sont récupérées, séchées sur du sulfate de magnésium anhydre et concentrées sous pression réduite. 4,93 g de produit 4-phénoxybenzaldéhyde est récupéré. Le produit analysé par RMN $^1H$ et $^{13}C$ est pur. Aspect : huile incolore. Rendement massique = 57%.

Cette réaction est résumée par le schéma de synthèse ci-dessous.

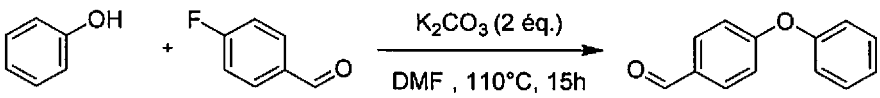


1 éq. phénol

0.82 éq. 4-fluorobenzaldéhyde

4-phénoxybenzaldéhyde

Une résine phénolique a ensuite été synthétisée sans formaldéhyde à partir du 4-phénoxybenzaldéhyde selon le protocole opératoire détaillé plus bas.

Le 4-phénoxybenzaldéhyde (6,32 g, 1,5 éq., 31,9 mmol), le phénol (2 g, 1 éq., 21,3 mmol) et l'hydroxyde de sodium en solution aqueuse à 50 % massique (0,41 g, 0,5 éq., 10,3 mmol) sont placés dans un ballon de 50 mL muni d'un réfrigérant sous agitation magnétique. Le ballon est plongé dans un bain d'huile thermostaté à 130°C pendant 20 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Ces réactions sont résumées par le schéma de synthèse ci-dessous.

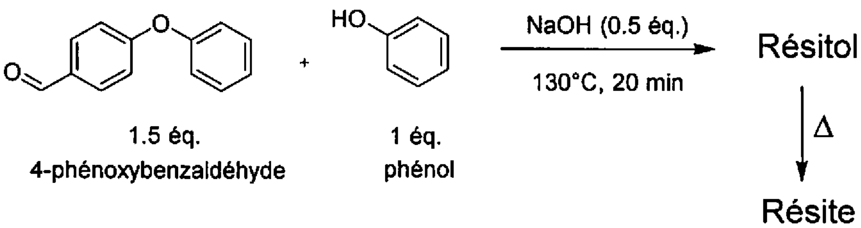


1.5 éq. 4-phénoxybenzaldéhyde

1 éq. phénol

*Exemple 2: greffage de fonctions aldéhyde aromatiques (synthèse de* 4-hydroxybenzaldéhyde-benzaldéhyde *et application de ce dernier en synthèse de résine phénolique sans formaldéhyde - selon l'invention)*

Le 4-hydroxybenzaldéhyde (20 g, 1 éq., 164 mmol), le 4-fluorobenzaldéhyde (41,7 g, 2 éq., 329 mmol), le carbonate de potassium (45,5 g, 2 éq., 329 mmol) et 155 mL de N,N-diméthylformamide sont placés dans un ballon de 500 mL muni d'un réfrigérant sous agitation magnétique et atmosphère d'argon. Le ballon est plongé dans un bain d'huile thermostaté à 110°C pendant 6 heures. A l'issue des 6 heures de réaction, la conversion du 4-hydroxybenzaldéhyde en 4-hydroxybenzaldéhyde-benzaldéhyde, déterminée par analyses RMN $^1H$ du brut réactionnel, est totale. Le milieu réactionnel est filtré sur papier filtre, le filtrat est récupéré puis distillé sous pression réduite afin de retirer le DMF. Le produit est purifié par extraction liquide-liquide avec $AcOEt/H_2O$ puis lavé trois fois avec une solution de saumure afin de retirer le DMF résiduel. Les phases organiques sont récupérées, séchées sur du sulfate de magnésium anhydre puis concentrées sous pression réduite. L'excès de réactif 4-fluorobenzaldéhyde est distillé sous vide (T=80°C, P=$5.10^{-3}$ mbar). 35,4 g de produit 4-hydroxybenzaldéhyde-benzaldéhyde est récupéré. Les analyses RMN $^1H$ et $^{13}C$ indiquent que le produit est pur. Aspect : poudre blanche. Rendement massique = 95%.

Cette réaction est résumée par le schéma de synthèse ci-dessous.

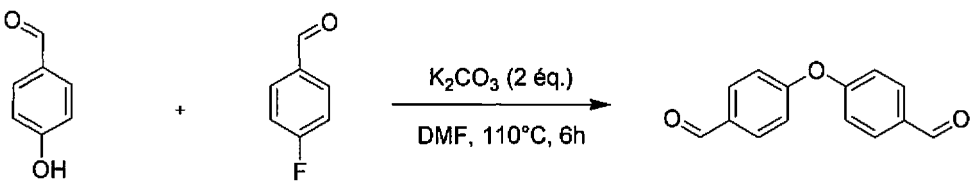


1 éq. 4-hydroxybenzaldéhyde

2 éq. 4-fluorobenzaldéhyde

4-hydroxybenzaldéhyde -benzaldéhyde

Une résine phénolique a ensuite été synthétisée sans formaldéhyde à partir du 4-hydroxybenzaldéhyde-benzaldéhyde selon le protocole opératoire détaillé plus bas.

Le 4-hydroxybenzaldéhyde-benzaldéhyde (1,24 g, 0,75 éq., 5,5 mmol), le phénol (0,686 g, 1 éq., 7,3 mmol) et l'hydroxyde de sodium en solution aqueuse à 50 % massique (0,09 g, 0,3 éq., 2,2 mmol) sont placés dans un ballon de 50 mL muni d'un réfrigérant sous agitation magnétique. Le ballon est plongé dans un bain d'huile thermostaté à 130°C pendant 15 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Ces réactions sont résumées par le schéma de synthèse ci-dessous.

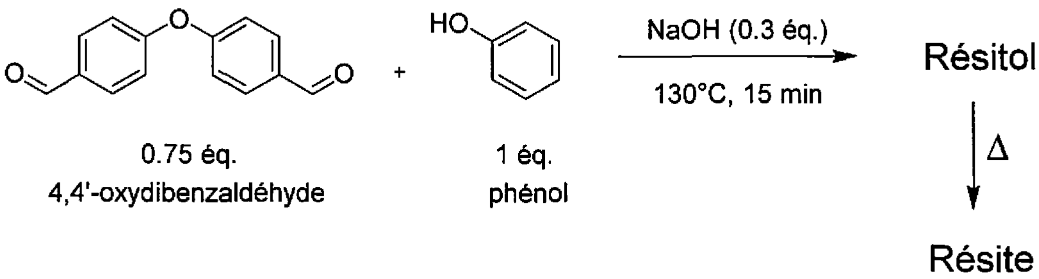

0.75 éq.
4,4'-oxydibenzaldéhyde
1 éq.
phénol

*Exemple 3 : greffage de fonctions aldéhyde aromatiques (synthèse de vanilline-benzaldéhyde et application de ce dernier en synthèse de résine phénolique sans formaldéhyde - selon l'invention)*

La vanilline (1,62 g, 1 éq., 10,6 mmol), le 4-fluorobenzaldéhyde (2,63 g, 2 éq., 21,2 mmol), le carbonate de potassium (2,94 g, 2éq., 21,2 mmol) et 10 mL de N,N-diméthylformamide sont placés dans un ballon de 50 mL muni d'un réfrigérant sous agitation magnétique et atmosphère d'argon. Le ballon est plongé dans un bain d'huile thermostaté à 110°C pendant 42 heures. La vanilline utilisée peut, par exemple, être obtenue par une voie de synthèse bio-sourcée comme décrit dans l'article : M.B. Hocking, Vanillin: synthetic flavoring from spent sulfite liquor, J. Chem. Educ., 74 (1997) 1055-1059. A l'issue des 42 heures de réaction, la conversion de la vanilline en vanilline-benzaldéhyde, déterminée par analyse RMN $^1H$ du brut réactionnel, est totale. Le milieu réactionnel est filtré sur papier filtre, le filtrat est récupéré puis distillé sous pression réduite afin de retirer le DMF. Le produit est purifié par extraction liquide-liquide avec AcOEt/$H_2O$ puis lavé trois fois avec une solution de saumure afin de retirer le DMF résiduel. Les phases organiques sont récupérées, séchées sur du sulfate de magnésium anhydre puis concentrées sous pression réduite. Le produit vanilline-benzaldéhyde est séparé de l'excès de réactif 4-fluorobenzaldéhyde par chromatographie séparative sur silice avec l'éluant : 90% cyclohexane /10% AcOEt. 2,04g de produit est récupéré. Les analyses RMN $^1H$ et $^{13}C$ indiquent que le produit est pur. Aspect : poudre blanche. Rendement massique = 75%.

Cette réaction est résumée par le schéma de synthèse ci-dessous.

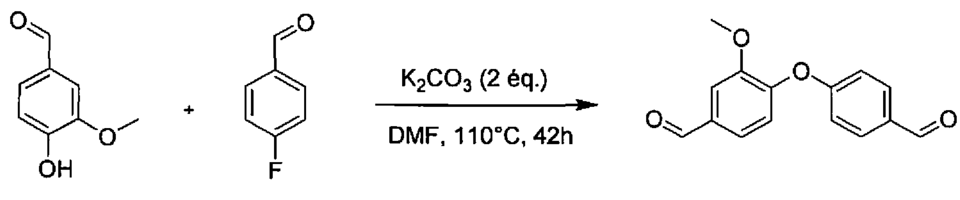

1 éq.
2 éq.
vanilline
4-fluorobenzaldéhyde
vanilline-benzaldéhyde

Une résine phénolique a ensuite été synthétisée sans formaldéhyde à partir du vanilline-benzaldéhyde selon le protocole opératoire détaillé plus bas.

Le vanilline-benzaldéhyde (1,4 g, 0,75 éq., 5,5 mmol), le phénol (0,686 g, 1 éq., 7,3 mmol) et l'hydroxyde de sodium en solution aqueuse à 50 % massique (0,1 g, 0,3 éq., 2,5 mmol) sont placés dans un ballon de 50 mL muni d'un réfrigérant sous agitation magnétique. Le ballon est plongé dans un bain d'huile thermostaté à 130°C pendant 20 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Ces réactions sont résumées par le schéma de synthèse ci-dessous.

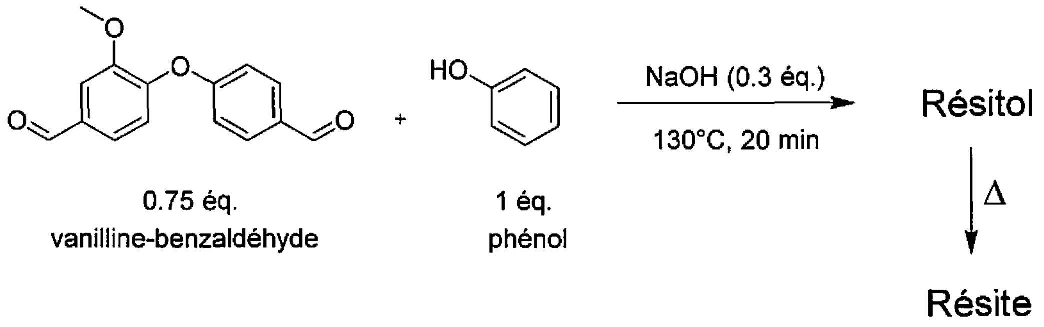


*Exemple 4 : greffage de fonctions aldéhyde aliphatiques pour la préparation de résines phénoliques sans formaldéhyde (hors invention)*

Dans cet exemple, il a tout d'abord été synthétisé le 2-(phénoxyméthyl)-1,3-dioxolane selon le protocole opératoire décrit ci-dessous.

Le phénol (3 g, 1 éq., 31,9 mmol), le carbonate de potassium (8,81 g, 2 éq., 63,8 mmol), le 2-bromométhyl-1,3-dioxolane (10,65 g, 2 éq., 46,1 mmol) et le butyronitrile (30 mL) sont placés dans un ballon de 100 mL muni d'un réfrigérant et sous agitation magnétique. Le milieu est placé à reflux du butyronitrile, à 115°C. Après 58 heures de réaction, la conversion du phénol en 2-(phénoxyméthyl)-1,3-dioxolane, déterminée par analyse RMN $^1H$ du brut réactionnel, est totale. Le milieu réactionnel est filtré sur papier filtre et le produit est purifié par extraction liquide-liquide avec AcOEt/$H_2O$. Les phases organiques sont récupérées, séchées sur du sulfate de magnésium anhydre et concentrées sous pression réduite. Le réactif dioxolane résiduel présent dans le produit est distillé sous vide secondaire (T=100°C, P= $2.10^{-2}$ mbar). 4,12 g de 2-(phénoxyméthyl)-1,3-dioxolane est obtenu. Le produit caractérisé par RMN $^1H$ et $^{13}C$ est pur. Aspect : liquide incolore. Rendement massique = 72%.

Cette réaction est résumée par le schéma de synthèse ci-dessous.

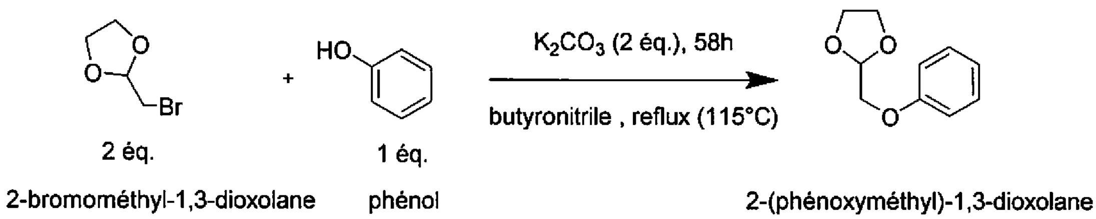


A partir du 2-(phénoxyméthyl)-1,3-dioxolane, le 2-phénoxyacétaldéhyde a ensuite été synthétisé par mise en oeuvre du protocole opératoire décrit ci-dessous.

Le composé 2-(phénoxyméthyl)-1,3-dioxolane (0,756 g, 1 éq., 4,2 mmol) et le mélange de solvants constitué de 32 mL de solution HCl à 1 mol/L (7,6 éq., 32 mmol) et de 32 mL de 1,4-dioxane sont placés dans un ballon de 250 mL sous agitation magnétique et muni d'un réfrigérant. Le ballon est placé dans un bain d'huile thermostaté à 80°C pendant 5h. A l'issue de cette réaction, le pH du milieu réactionnel est neutralisé avec une solution saturée de $NaHCO_3$, le solvant dioxane est évaporé sous pression réduite et le produit est purifié par extraction liquide-liquide avec AcOEt/$H_2O$. Les phases organiques sont récupérées, séchées sur du sulfate de magnésium anhydre et concentrées sous pression réduite. Le produit est isolé pur par chromatographie séparative avec un mélange d'éluant AcOEt/Cyclohexane : 20/80. 0,35 g de produit 2-phénoxyacétaldéhyde est obtenu. Le produit caractérisé par RMN $^1H$ et $^{13}C$ est pur. Aspect : huile incolore. Rendement massique = 62%.

Cette réaction de déprotection du 2-(phénoxyméthyl)-1,3-dioxolane en 2-phénoxyacétaldéhyde est résumée par le schéma de synthèse ci-dessous.

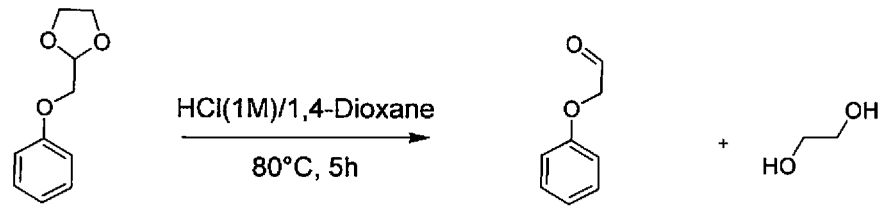


2-(phénoxyméthyl)-1,3-dioxolane 2-phénoxyacétaldéhyde éthylène glycol

Une résine phénolique a ensuite été synthétisée sans formaldéhyde à partir du 2-phénoxyacétaldéhyde selon le protocole opératoire détaillé plus bas.

Le 2-phénoxyacétaldéhyde (2 g, 1,5 éq., 14,7 mmol), le phénol (0,922 g, 1 éq., 9,8 mmol) et l'hydroxyde de sodium en solution aqueuse à 50 % massique (0,15 g, 0,4 éq., 3,6 mmol) sont placés dans un ballon de 50 mL muni d'un réfrigérant sous agitation magnétique. Le ballon est plongé dans un bain d'huile thermostaté à 130°C pendant 10 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir et rigide.

Cette réaction est résumée par le schéma de synthèse ci-dessous.

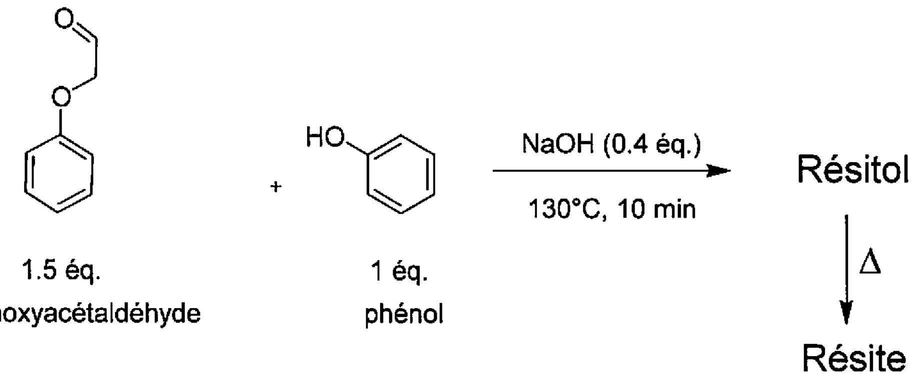


1.5 éq.
2-phénoxyacétaldéhyde

1 éq.
phénol

*Exemple 5: greffage de fonctions aldéhyde aliphatiques pour la préparation de résines phénoliques sans formaldéhyde (selon l'invention)*

Dans cet exemple, il a tout d'abord été synthétisé le 4-hydroxybenzaldéhyde-diéthoxyéthane selon le protocole opératoire décrit ci-dessous.

Le 4-hydroxybenzaldéhyde (4,15 g, 1 éq., 34 mmol), le carbonate de potassium (9,4 g, 2 éq., 68 mmol), le 2-bromo-1,1-diéthoxyéthane (13,4 g, 2 éq., 68 mmol) et le butyronitrile (30 mL) sont placés dans un ballon de 100 mL muni d'un réfrigérant et sous agitation magnétique. Le milieu est placé à reflux du butyronitrile, à 115°C. Après cinq jours de réaction, la conversion de 4-hydroxybenzaldéhyde en 4-hydroxybenzaldéhyde-diéthoxyéthane, déterminée par analyses RMN $^1H$ du brut réactionnel, est totale. Le milieu réactionnel est filtré sur papier filtre et le produit est purifié par extraction liquide-liquide avec $AcOEt/H_2O$. Les phases organiques sont récupérées, séchées sur du sulfate de magnésium anhydre et concentrées sous pression réduite. Le réactif acétal résiduel présent dans le produit est distillé sous vide secondaire (T=100°C, P= $2.10^{-2}$ mbar). 6,9 g de produit 4-hydroxybenzaldéhyde-diéthoxyéthane est obtenu. Le produit caractérisé par RMN $^1H$ et $^{13}C$ est pur. Aspect : huile jaune. Rendement massique = 85%. Cette réaction est résumée par le schéma de synthèse ci-dessous.

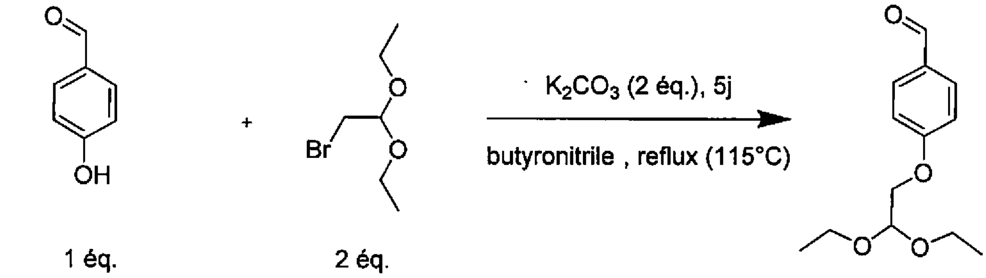


1 éq. 2 éq.

4-hydroxy benzaldéhyde 2-bromo-1,1-diéthoxyéthane 4-hydroxybenzaldéhyde -diéthoxyéthane

A partir du 4-hydroxybenzaldéhyde-diéthoxyéthane, le 4-hydroxybenzaldéhyde-acétaldéhyde a ensuite été synthétisé par mise en oeuvre du protocole opératoire décrit ci-dessous.

Le composé 4-hydroxybenzaldéhyde-diéthoxyéthane (1 g, 1 éq., 4,2 mmol) et le mélange de solvants constitué de 16 mL de solution HCl à 1 mol/L (3,8 éq., 16 mmol) et de 16 mL de tétrahydrofurane sont placés dans un ballon de 100 mL sous agitation magnétique et muni d'un réfrigérant. Le ballon est placé dans un bain d'huile thermostaté à 60°C pendant 5 heures. A l'issue de cette réaction, le pH du milieu réactionnel est neutralisé avec une solution saturée de $NaHCO_3$, le solvant THF est évaporé sous pression réduite et le produit est purifié par extraction liquide-liquide avec $AcOEt/H_2O$. Les phases organiques sont récupérées, séchées sur du sulfate de magnésium anhydre et concentrées sous pression réduite. 0,6 g de produit 4-hydroxybenzaldéhyde-acétaldéhyde est obtenu. Le produit caractérisé par RMN $^1H$ et $^{13}C$ est pur. Aspect : poudre blanche. Rendement massique = 87%.

Cette réaction est résumée par la figure de synthèse ci-dessous.

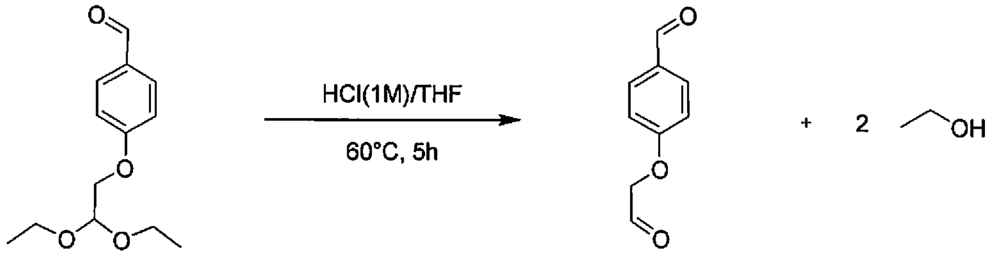


4-hydroxybenzaldéhyde -diéthoxyéthane 4-hydroxybenzaldéhyde -acétaldéhyde éthanol

Une résine phénolique a ensuite été synthétisée sans formaldéhyde à partir de 4-hydroxybenzaldéhyde-acétaldéhyde selon le protocole opératoire détaillé plus bas.

Le 4-hydroxybenzaldéhyde-acétaldéhyde (1,69 g, 0,75 éq., 10,3 mmol), le phénol (1,29 g, 1 éq., 13,7 mmol) et l'hydroxyde de sodium en solution aqueuse à 50 % massique (0,16 g, 0,3 éq., 4 mmol) sont placés dans un ballon de 50 mL muni d'un réfrigérant sous agitation magnétique. Le ballon est plongé dans un bain d'huile thermostaté à 130°C pendant 15 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

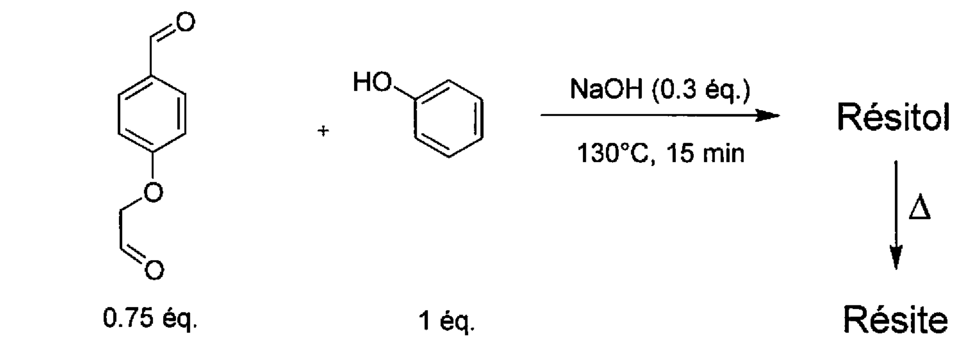


0.75 éq. 1 éq.

4-hydroxybenzaldéhyde -acétaldéhyde phénol

*Exemple 6 : greffage de fonctions aldéhyde aliphatiques pour la préparation de résines phénoliques sans formaldéhyde (selon l'invention)*

Dans cet exemple, il a tout d'abord été synthétisé le vanilline-diméthoxyéthane selon le protocole opératoire décrit ci-dessous.

La vanilline (11,25 g, 1 éq., 74 mmol), le carbonate de potassium (40,9 g, 4 éq., 296 mmol), le 2-bromo-1,1-diméthoxyéthane (25 g, 2 éq., 147,9 mmol) et le butyronitrile (240 mL) sont placés dans un ballon de 500 mL muni d'un réfrigérant et sous agitation magnétique. Le milieu est placé à reflux du butyronitrile, à 115°C. Après quatre jours de réaction, la conversion de la vanilline en vanilline-diméthoxyéthane, déterminée par analyse RMN $^1H$ du brut réactionnel, est totale. Le milieu réactionnel est filtré sur papier filtre et le produit est purifié par extraction liquide-liquide avec $AcOEt/H_2O$. Les phases organiques sont récupérées, séchées sur du sulfate de magnésium anhydre et concentrées sous pression réduite. Le réactif acétal résiduel présent dans le produit est distillé sous vide secondaire (T=100°C, P= $2.10^{-2}$ mbar). 16,74 g de produit vanilline-diméthoxyéthane est obtenu. Le produit caractérisé par RMN $^1H$ et $^{13}C$ est pur. Aspect : huile jaune. Rendement massique = 94%. Cette réaction est résumée par le schéma de synthèse ci-dessous.

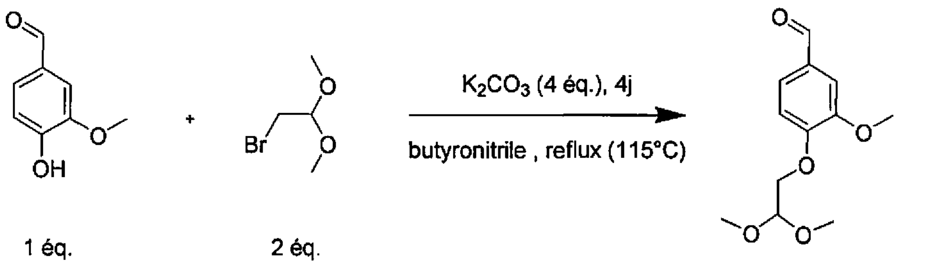


1 éq. 2 éq.

vanilline 2-bromo-1,1-diméthoxyéthane vanilline-diméthoxyéthane

A partir du vanilline-diméthoxyéthane, le vanilline-acétaldéhyde a ensuite été synthétisé par mise en oeuvre du protocole opératoire décrit ci-dessous.

Le composé vanilline-diméthoxyéthane (1 g, 1 éq., 4,2 mmol) et le mélange de solvants constitué de 16 mL de solution HCl à 1 mol/L (3,8 éq., 16 mmol) et de 16 mL de tétrahydrofurane sont placés dans un ballon de 100 mL sous agitation magnétique et muni d'un réfrigérant. Le ballon est placé dans un bain d'huile thermostaté à 60°C pendant 22 heures. A l'issue de cette réaction, le pH du milieu réactionnel est neutralisé avec une solution saturée de $NaHCO_3$, le solvant THF est évaporé sous pression réduite et le produit est purifié par extraction liquide-liquide avec $AcOEt/H_2O$. Les phases organiques sont récupérées, séchées sur du sulfate de magnésium anhydre et concentrées sous pression réduite. 0,75 g de produit vanilline-acétaldéhyde est obtenu. Le produit caractérisé par RMN $^1H$ et $^{13}C$ est pur. Aspect : poudre blanche. Rendement massique = 90%.

Cette réaction est résumée par la figure de synthèse ci-dessous.

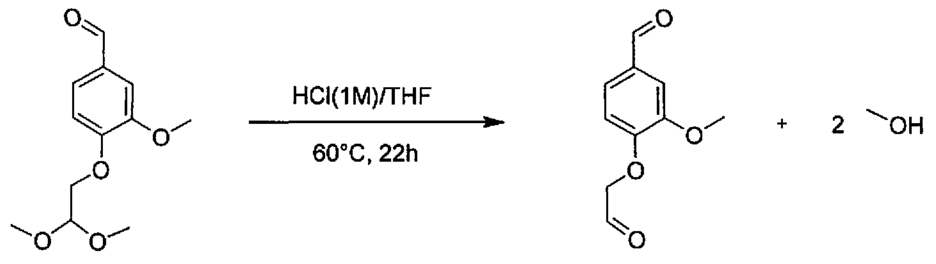


vanilline-diméthoxyéthane vanilline-acétaldéhyde méthanol

Une résine phénolique a ensuite été synthétisée sans formaldéhyde à partir de vanilline-acétaldéhyde selon le protocole opératoire détaillé plus bas.

Le vanilline-acétaldéhyde (2 g, 0,75 éq., 10,3 mmol), le phénol (1,29 g, 1 éq., 13,7 mmol) et l'hydroxyde de sodium en solution aqueuse à 50 % massique (0,16 g, 0,3 éq., 4 mmol) sont placés dans un ballon de 50 mL muni d'un réfrigérant sous agitation magnétique. Le ballon est plongé dans un bain d'huile thermostaté à 130°C pendant 5 minutes. A l'issue de cette réaction, le mélange est sous forme de résitol, homogène et visqueux. Il est récupéré, placé dans une coupelle en aluminium et cuit à l'étuve, sous pression atmosphérique, suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

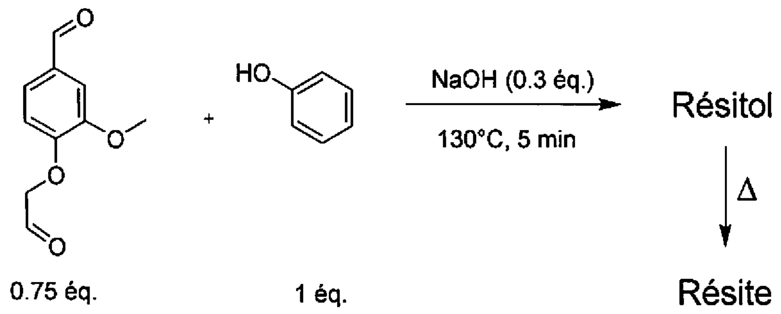


0.75 éq. 1 éq.

vanilline-acétaldéhyde phénol

*Exemple 7 : analyse des propriétés de stabilité thermique et de charbonnement des résines phénoliques réticulées obtenues*

Les mesures de taux de coke des résites synthétisés ont été effectuées par analyses thermogravimétriques (ATG) sur un appareil Q50 commercialisé par la société TA Instrument. Un échantillon de résite sous forme monolithique de 30 mg est placé sur une nacelle en platine puis chauffé, sous un flux d'azote (60 mL/min) selon le programme suivant :

Montée linéaire de 20°C à 160°C à la vitesse de 10°C/min
Isotherme d'une heure à 160°C (mi)
Montée linéaire de 160°C à 900°C à la vitesse de 10°C/min
Isotherme d'une heure à 900°C (mf)

Le taux de coke est calculé selon l'équation suivante dans laquelle les grandeurs mi et mf correspondent aux masses de l'échantillon à la fin des isothermes à 160°C et 900°C respectivement :

$$\text{Taux de coke} = mf/mi$$

La figure 1 représente les résultats obtenus par ATG pour les résines synthétisées aux exemples 1 (résite 4-phénoxybenzaldéhyde/phénol), 2 (résite 4-hydroxybenzaldéhyde-benzaldéhyde/phénol) et 3 (résite vanilline-benzaldéhyde/phénol) en comparaison avec les résultats obtenus pour l'Ablaphène RS101.

La figure 2 représente les résultats obtenus par ATG pour les résines synthétisées aux exemples 4 (résite 2-phénoxyacétaldéhyde/phénol), 5 (4-hydroxybenzaldéhyde-acétaldéhyde/phénol) et 6 (vanilline-acétaldéhyde/phénol) en comparaison avec les résultats obtenus pour l'Ablaphène RS101.

Les taux de coke ainsi que les températures de dégradation à 10% massique (Td10%) des résines testées sont reportées aux tableaux 1 et 2 ci-dessous.

Tableau 1

| Résite | Td10% | Taux de coke |
|---|---|---|
| 4-Phénoxybenzaldéhyde/Phénol | 375°C | 56% |
| 4-Hydroxybenzaldéhyde-benzaldéhyde/phénol | 497°C | 66% |
| Vanilline-benzaldéhyde/Phénol | 440°C | 68% |
| Ablaphène RS101 | 370°C | 63% |

Tableau 2

| Résite | Td10% | Taux de coke |
|---|---|---|
| 2-Phénoxyacétaldéhyde/Phénol | 260°C | 44% |
| 4-Hydroxybenzaldéhyde-acétaldéhyde/phénol | 352°C | 61% |
| Vanilline-acétaldéhyde/Phénol | 330°C | 51% |
| Ablaphène RS101 | 370°C | 63% |

Ces résultats montrent que les résines fabriquées par le procédé selon l'invention présentent des propriétés de stabilité thermique et de charbonnement similaires, voire supérieures à celles de la résine Ablaphène RS101 de référence. Ce procédé donne donc accès à des résines phénoliques qui peuvent avantageusement substituer les résines formo-phénoliques conventionnelles pour l'élaboration de pièces aéronautiques comme des tuyères de propulseur. En outre, ces résultats montrent que la mise en oeuvre d'un composé aldéhyde aromatique polyfonctionnel (4-hydroxybenzaldéhyde-acétaldéhyde, vanilline-acétaldéhyde, 4-hydroxybenzaldéhyde-benzaldéhyde ou vanilline-benzaldéhyde) permet avantageusement d'obtenir des propriétés de stabilité thermique et de charbonnement améliorées par rapport à la mise en oeuvre de composés aldéhyde aromatiques monofonctionnels (2-phénoxyacétaldéhyde et 4-phénoxybenzaldéhyde).

L'expression « comportant/contenant/comprenant un(e) » doit se comprendre comme « comportant/contenant/comprenant au moins un(e) ».

L'expression « compris(e) entre ... et ... » ou « de ... à ... » doit se comprendre comme incluant les bornes.

## Revendications

**1.** Procédé de fabrication d'une tuyère de propulseur dans lequel la tuyère est fabriquée à partir d'une résine phénolique obtenue au moins par mise en oeuvre de l'étape suivante:

a) pré-polymérisation d'un composé aldéhyde aromatique avec un composé phénolique afin d'obtenir la résine phénolique, le composé aldéhyde aromatique présentant l'une ou l'autre des formules A ou B suivantes :

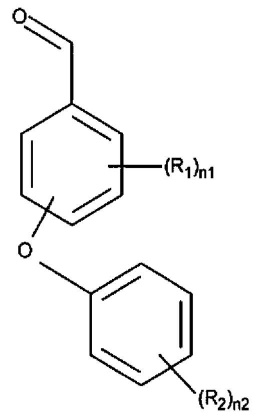

A

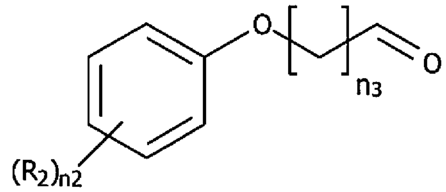

B

le composé aldéhyde aromatique étant polyfonctionnel et les formules A et B étant telles que $n_1$ est un entier compris entre 0 et 4 et lorsque $n_1$ est supérieur ou égal à 2, les substituants $R_1$ sont identiques ou différents, $n_2$ est un entier compris entre 0 et 5 et lorsque $n_2$ est supérieur ou égal à 2, les substituants $R_2$ sont identiques ou différents et $n_3$ est un entier compris entre 1 et 6, et

les formules A et B étant telles que les substituants $R_1$ et $R_2$ sont choisis indépendamment l'un de l'autre parmi : -OH, -COOH, -CHO, les groupements -O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées, interrompues ou non par un ou plusieurs hétéroatomes, et présentant éventuellement une ou plusieurs fonctions carbonyle ou acide carboxylique, les groupes carbocycliques ou hétérocycliques saturés, insaturés ou aromatiques, monocycliques ou polycycliques, substitués ou non substitués, et présentant éventuellement une ou plusieurs fonctions carbonyle ou acide carboxylique, les groupements aryles substitués ou non substitués et présentant éventuellement une ou plusieurs fonctions carbonyle ou acide carboxylique,

$R_2$ pouvant en outre désigner un radical de formule A1 dans la formule A ci-dessus ou un radical de formule B1 dans la formule B ci-dessus et $R_1$ pouvant en outre désigner un radical de formule A2 dans la formule A ci-dessus, les formules A1, A2 et B1 étant les suivantes :

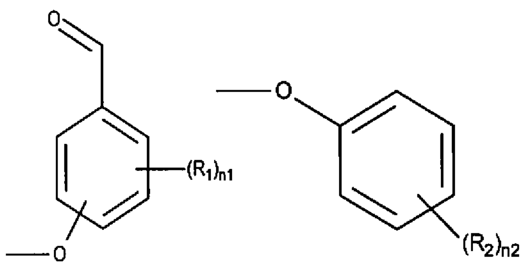

A2

A1

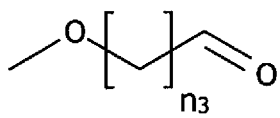

B1

dans les formules A1, A2 et B1, $R_1$, $R_2$, $n_1$, $n_2$ et $n_3$ sont tels que définis plus haut.

**2.** Procédé selon la revendication 1, **caractérisé en ce que** le composé aldéhyde aromatique mis en oeuvre lors de l'étape a) présente la formule A et **en ce que** le procédé comporte, en outre, avant l'étape a) une étape de fabrication dudit composé aldéhyde aromatique par réaction de substitution nucléophile aromatique entre un composé ayant la formule A3 et un composé ayant la formule A4 où X désigne un groupe partant, les formules A3 et A4 étant les suivantes :

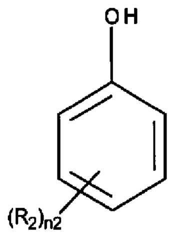

A3

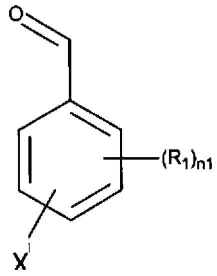

A4

3. Procédé selon la revendication 1, **caractérisé en ce que** le composé aldéhyde aromatique mis en oeuvre lors de l'étape a) présente la formule B et **en ce que** le procédé comporte, en outre, avant l'étape a) les deux étapes suivantes :

    a) une réaction de substitution nucléophile entre un composé de formule A3 et un composé de formule B2 afin d'obtenir un composé de formule B3, où Z est un groupement protecteur permettant d'obtenir une fonction aldéhyde après déprotection et Y est un groupe partant, et
    b) une réaction de déprotection du composé de formule B3 afin d'obtenir le composé aldéhyde aromatique de formule B,

    les formules A3, B2, B3 étant les suivantes :

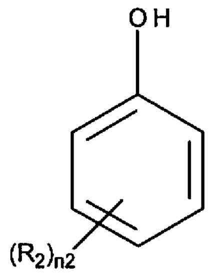

A3

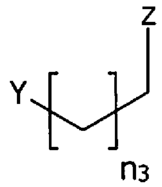

B2

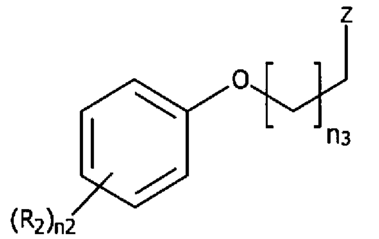

B3

4. Procédé selon l'une quelconque des revendications 1 à 3, **caractérisé en ce que** les substituants $R_1$ et $R_2$ sont choisis indépendamment l'un de l'autre parmi : -OH, -CHO, les groupements -O-Alk où Alk désigne une chaîne alkyle substituée ou non substituée de 1 à 4 atomes de carbone, de préférence -OMe, -COOH, les groupements aryles substitués ou non substitués et présentant éventuellement une ou plusieurs fonctions carbonyle ou acide carboxylique,
   $R_2$ pouvant en outre désigner un radical de formule A1 dans la formule A ci-dessus ou un radical de formule B1 dans la formule B ci-dessus et $R_1$ pouvant en outre désigner un radical de formule A2 dans la formule A ci-dessus, dans les formules A1, A2 et B1, $R_1$ et $R_2$ sont tels que définis plus haut dans cette revendication.

5. Procédé selon la revendication 4, **caractérisé en ce que** les substituants $R_1$ et $R_2$ sont choisis indépendamment l'un de l'autre parmi : - OH, -CHO, -OMe où Me désigne un groupement méthyle, les groupements aryles substitués ou non substitués et présentant éventuellement une ou plusieurs fonctions carbonyle ou acide carboxylique.

6. Procédé selon l'une quelconque des revendications 1 à 5, **caractérisé en ce que** $n_1$ est compris entre 0 et 2 et $n_2$ est compris entre 0 et 3 pour la formule A.

7. Procédé selon l'une quelconque des revendications 1 à 5, **caractérisé en ce que** $n_2$ est compris entre 0 et 3 et $n_3$ est compris entre 1 et 3 pour la formule B.

8. Procédé selon l'une quelconque des revendications 2 à 7, **caractérisé en ce que** le composé de formule A3 mis en oeuvre pour fabriquer le composé aldéhyde aromatique est choisi parmi : les phénols simples, les composés polyphénoliques, les aldéhydes hydroxybenzoïques, les acides hydroxybenzoïques, les alcools hydroxybenzyliques, les alcools hydroxycinnamyliques, les acides hydroxycinnamiques, les phénylpropènes, les coumarines, les naphtoquinones, les stilbénoïdes, les flavonoïdes, les iso-flavonoïdes, les anthocyanes, les lignanes, les lignines, les tanins condensés, les tanins hydrolysables, les tanins dépolymérisés et les résines résoles et novolaques.

9. Procédé selon la revendication 8, **caractérisé en ce que** le composé de formule A3 mis en oeuvre pour fabriquer le composé aldéhyde aromatique est choisi parmi : les phénols simples et les aldéhydes hydroxybenzoïques.

10. Procédé selon l'une quelconque des revendications 8 et 9, **caractérisé en ce que** le composé de formule A3 mis en oeuvre pour fabriquer le composé aldéhyde aromatique est choisi parmi : le phénol, le pyrocatéchol, le résorcinol, l'hydroquinone, le phloroglucinol, le pyrogallol, le guaiacol, le syringol, le bis-phénol A, le bis-phénol S, le para-hydroxybenzaldéhyde, la vanilline, le syringaldéhyde, la déhydrodivanilline, l'alcool 2-hydroxybenzylique, l'alcool 4-hydroxybenzylique, l'alcool vanillique, l'alcool syringique, l'alcool paracoumarylique, l'alcool coniférylique, l'alcool sinapylique, l'acide férulique, l'acide parahydroxybenzoïque, l'acide gallique, l'acide paracoumarique, l'eugénol, l'isoeugénol, les cardanols, les cardols, les acides anacardiques, la catéchine, l'ombelliférone, la juglone, le trans-resvératrol, le kaempférol, la daidzéine, le delphinidol, l'entérodiol, les lignines, les procyanidines, les gallotanins, les tanins condensés, les résines résoles et novolaques.

11. Procédé selon l'une quelconque des revendications 1 à 10 dans lequel la tuyère est fabriquée à partir d'une résine phénolique obtenue par mise en oeuvre de l'étape de pré-polymérisation ou à partir d'une résine phénolique réticulée obtenue après mise en oeuvre d'une étape durant laquelle un traitement thermique est effectué de manière à réticuler des résines phénoliques obtenues par mise en oeuvre de l'étape de pré-polymérisation.

## Patentansprüche

1. Verfahren zur Herstellung einer Triebwerksdüse, bei dem die Düse aus einem Phenolharz hergestellt wird, das zumindest durch Ausführen des folgenden Schritts erhalten wird:

a) Vorpolymerisation einer aromatischen Aldehydverbindung mit einer Phenolverbindung, um das Phenolharz zu erhalten, wobei die aromatische Aldehydverbindung eine der folgenden Formeln A oder B aufweist:

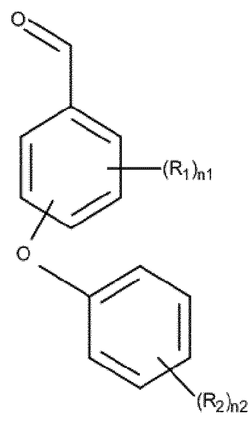

A

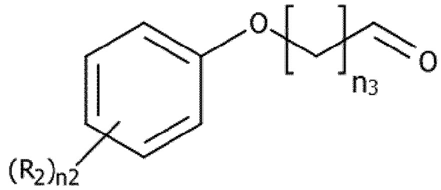

B

wobei die aromatische Aldehydverbindung polyfunktional ist und die Formeln A und B so beschaffen sind, dass $n_1$ eine ganze Zahl zwischen 0 und 4 ist, und wenn $n_1$ größer oder gleich 2 ist, die Substituenten $R_1$ identisch oder verschieden sind, $n_2$ eine ganze Zahl zwischen 0 und 5 ist, und wenn $n_2$ größer oder gleich 2 ist, die Substituenten $R_2$ identisch oder verschieden sind, und $n_3$ eine ganze Zahl zwischen 1 und 6 ist, und wobei die Formeln A und B so beschaffen sind, dass die Substituenten $R_1$ und $R_2$ unabhängig voneinander ausgewählt sind aus: -OH, -COOH, -CHO, -O-Alk-Gruppen, worin Alk eine substituierte oder unsubstituierte Alkylkette mit 1 bis 4 Kohlenstoffatomen bezeichnet, Kohlenwasserstoffketten mit 1 bis 20 Kohlenstoffatomen, gesättigt oder ungesättigt, substituiert oder unsubstituiert, durch ein oder mehrere Heteroatome unterbrochen oder nicht, und gegebenenfalls mit einer oder mehreren Carbonyl- oder Carbonsäurefunktionen, gesättigten, ungesättigten oder aromatischen, monocyclischen oder polycyclischen, substituierten oder unsubstituierten carbocyclischen oder heterocyclischen Gruppen, die gegebenenfalls eine oder mehrere Carbonyl- oder Carbonsäurefunktionen aufweisen, substituierten oder unsubstituierten Arylgruppen mit gegebenenfalls einer oder mehreren Carbonyl- oder Carbonsäurefunktionen,
wobei $R_2$ auch einen Rest der Formel A1 in der obigen Formel A oder einen Rest der Formel B1 in der obigen Formel B bezeichnen kann und $R_1$ auch einen Rest der Formel A2 in der obigen Formel A bezeichnen kann, wobei die Formeln A1, A2 und B1 die folgenden sind:

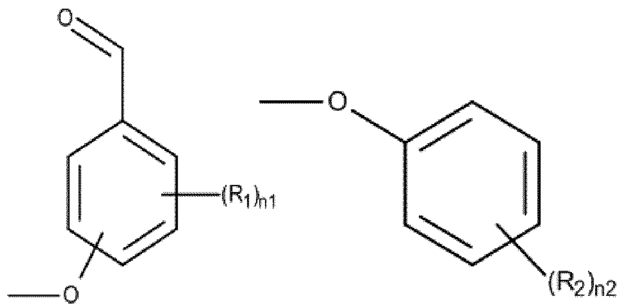

A1 A2

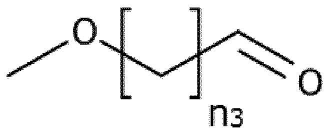

B1

wobei in den Formeln A1, A2 und B1 $R_1$, $R_2$, $n_1$, $n_2$ und $n_3$ wie oben definiert sind.

**2.** Verfahren nach Anspruch 1, **dadurch gekennzeichnet, dass** die in Schritt a) verwendete aromatische Aldehydverbindung die Formel A aufweist und dass das Verfahren ferner vor Schritt a) einen Schritt zur Herstellung der aromatischen Aldehydverbindung durch aromatische nucleophile Substitutionsreaktion zwischen einer Verbindung mit der Formel A3 und einer Verbindung mit der Formel A4 umfasst, worin X eine Abgangsgruppe bezeichnet, wobei die Formeln A3 und A4 die folgenden sind:

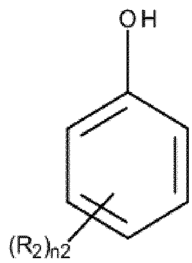

A3

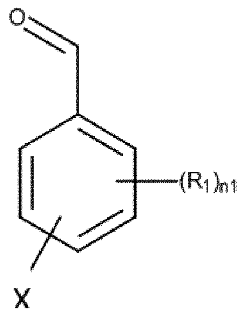

A4

**3.** Verfahren nach Anspruch 1, **dadurch gekennzeichnet, dass** die in Schritt a) verwendete aromatische Aldehydverbindung die Formel B aufweist und dass das Verfahren ferner vor Schritt a) die folgenden beiden Schritte umfasst:

a) eine nucleophile Substitutionsreaktion zwischen einer Verbindung der Formel A3 und einer Verbindung der Formel B2, um eine Verbindung der Formel B3 zu erhalten, worin Z eine Schutzgruppe ist, die es ermöglicht, nach der Entschützung eine Aldehydfunktion zu erhalten, und Y eine Abgangsgruppe ist, und
b) eine Entschützungsreaktion der Verbindung der Formel B3, um die aromatische Aldehydverbindung der Formel B zu erhalten,

wobei die Formeln A3, B2, B3 die folgenden sind:

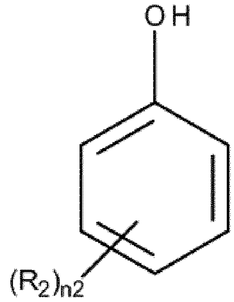

A3

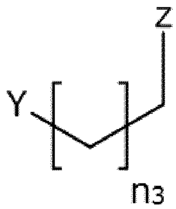

B2

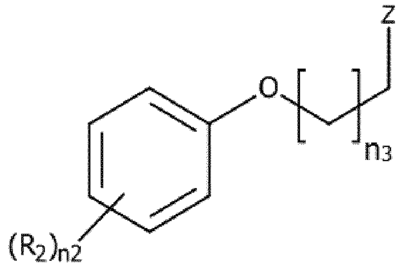

B3

**4.** Verfahren nach einem der Ansprüche 1 bis 3, **dadurch gekennzeichnet, dass** die Substituenten $R_1$ und $R_2$ unabhängig voneinander ausgewählt sind aus: -OH, - CHO, -O-Alk-Gruppen, worin Alk eine substituierte oder unsubstituierte Alkylkette mit 1 bis 4 Kohlenstoffatomen bezeichnet, vorzugsweise -OMe, -COOH, substituierten oder unsubstituierten Arylgruppen mit gegebenenfalls einer oder mehreren Carbonyl- oder Carbonsäurefunktionen, wobei $R_2$ auch einen Rest der Formel A1 in der obigen Formel A oder einen Rest der Formel B1 in der obigen Formel B bezeichnen kann und $R_1$ auch einen Rest der Formel A2 in der obigen Formel A bezeichnen kann, wobei die Formeln A1, A2 und B1, sowie $R_1$ und $R_2$ wie oben in diesem Anspruch definiert sind.

**5.** Verfahren nach Anspruch 4, **dadurch gekennzeichnet, dass** die Substituenten $R_1$ und $R_2$ unabhängig voneinander ausgewählt sind aus: - OH, -CHO, -OMe, wobei Me eine Methylgruppe bezeichnet, substituierten oder unsubstituierten Arylgruppen mit gegebenenfalls einer oder mehreren Carbonyl- oder Carbonsäurefunktionen.

**6.** Verfahren nach einem der Ansprüche 1 bis 5, **dadurch gekennzeichnet, dass** in der Formel A $n_1$ zwischen 0 und 2 und $n_2$ zwischen 0 und 3 liegt.

**7.** Verfahren nach einem der Ansprüche 1 bis 5, **dadurch gekennzeichnet, dass** in der Formel B $n_2$ zwischen 0 und 3 und $n_3$ zwischen 1 und 3 liegt.

**8.** Verfahren nach einem der Ansprüche 2 bis 7, **dadurch gekennzeichnet, dass** die zur Herstellung der aromatischen Aldehydverbindung verwendete Verbindung der Formel A3 ausgewählt ist aus: einfachen Phenolen, polyphenolischen Verbindungen, Hydroxybenzoaldehyden, Hydroxybenzoesäuren, Hydroxybenzylalkoholen, Hydroxycinnamylalkoholen, Hydroxycinnamsäuren, Phenylpropenen, Cumarinen, Naphthochinonen, Stilbenoiden, Flavonoiden, Isoflavonoiden, Anthocyanen, Lignanen, Ligninen, kondensierten Tanninen, hydrolysierbaren Tanninen, depolymerisierten Tanninen und Resol- und Novolakharzen.

**9.** Verfahren nach Anspruch 8, **dadurch gekennzeichnet, dass** die zur Herstellung der aromatischen Aldehydverbindung verwendete Verbindung der Formel A3 ausgewählt ist aus: einfachen Phenolen und Hydroxybenzoaldehyden.

**10.** Verfahren nach einem der Ansprüche 8 und 9, **dadurch gekennzeichnet, dass** die zur Herstellung der aromatischen Aldehydverbindung verwendete Verbindung der Formel A3 ausgewählt ist aus : Phenol, Pyrokatechin, Resorcin, Hydrochinon, Phloroglucin, Pyrogallol, Guajakol, Syringol, Bisphenol A, Bisphenol S, Parahydroxybenzaldehyd, Vanillin, Springaldehyd, Dehydrodivanillin, 2-Hydroxybenzylalkohol, 4-Hydroxybenzylalkohol, Vanillealkohol, Syringaalkohol, Paracumarylalkohol, Coniferylalkohol, Sinapylalkohol, Ferulasäure, Parahydroxybenzoesäure, Gallussäure, Paracumarsäure, Eugenol, Isoeugenol, Cardanolen, Cardolen, Anacardsäuren, Catechin, Umbelliferon, Juglon, Trans-Resveratrol, Kaempferol, Daidzein, Delphinidol, Enterodiol, Ligninen, Procyanidinen, Gallotanninen, kondensierten Tanninen, Resol- und Novolakharzen.

**11.** Verfahren nach einem der Ansprüche 1 bis 10, wobei die Düse aus einem Phenolharz hergestellt wird, das durch Ausführen des Vorpolymerisationsschritts erhalten wird, oder aus einem vernetzten Phenolharz, das nach Ausführen eines Schritts erhalten wird, in dem eine Wärmebehandlung durchgeführt wird, um Phenolharze zu vernetzen, die durch Ausführen des Vorpolymerisationsschritts erhalten werden.

## Claims

1. A method for producing a propulsion nozzle wherein the nozzle is produced from a phenolic resin obtained at least by carrying out the following step:

   a) pre-polymerization of an aromatic aldehyde compound with a phenolic compound in order to obtain the phenolic resin, the aromatic aldehyde compound having one or other of the following formulae A and B:

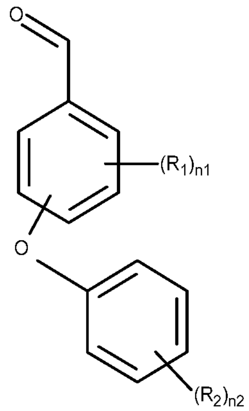

A

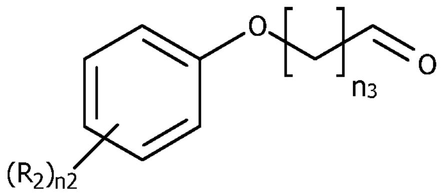

B

the aromatic aldehyde compound being polyfunctional and formulae A and B being such that $n_1$ is an integer between 0 and 4 and when $n_1$ is greater than or equal to 2, the substituents $R_1$ are identical or different, $n_2$ is an integer between 0 and 5 and when $n_2$ is greater than or equal to 2, the substituents $R_2$ are identical or different and $n_3$ is an integer between 1 and 6, and

formulae A and B being such that the substituents $R_1$ and $R_2$ are chosen independently from one another from: -OH, -COOH, -CHO, the groups -O-Alk wherein Alk denotes a substituted or unsubstituted alkyl chain of 1 to 4 carbon atoms, saturated or unsaturated, substituted or unsubstituted hydrocarbon-based chains comprising between 1 and 20 carbon atoms, optionally interrupted with one or more heteroatoms, and optionally having one or more carbonyl or carboxylic acid functions, substituted or unsubstituted, monocyclic or polycyclic, saturated, unsaturated or aromatic carbocyclic or heterocyclic groups optionally having one or more carbonyl or carboxylic acid functions, and substituted or unsubstituted aryl groups optionally having one or more carbonyl or carboxylic acid functions,

$R_2$ possibly also denoting a radical of formula A1 in formula A above or a radical of formula B1 in formula B above and $R_1$ possibly also denoting a radical of formula A2 in formula A above, formulae A1, A2 and B1 being the following:

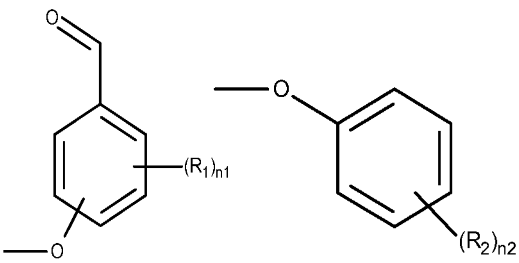

A2

A1

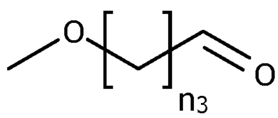

B1

in formulae A1, A2 and B1, $R_1$, $R_2$, $n_1$, $n_2$ and $n_3$ are as defined above.

2. The method as claimed in claim 1, **characterized in that** the aromatic aldehyde compound used during step a) has the formula A and **in that** the method comprises, in addition, before step a), a step of producing said aromatic aldehyde compound by aromatic nucleophilic substitution reaction between a compound having the formula A3 and

a compound having the formula A4 wherein X denotes a leaving group, the formulae A3 and A4 being the following:

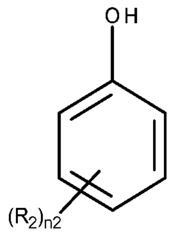

A3

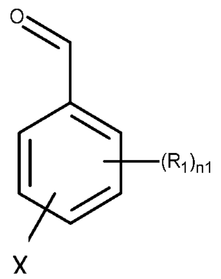

A4

3. The method as claimed in claim 1, **characterized in that** the aromatic aldehyde compound used during step a) has the formula B and **in that** the method comprises, in addition, before step a), the following two steps:

   a) a nucleophilic substitution reaction between a compound of formula A3 and a compound of formula B2 in order to obtain a compound of formula B3, wherein Z is a protective group making it possible to obtain an aldehyde function after deprotection and Y is a leaving group, and
   b) a reaction for deprotection of the compound of formula B3 in order to obtain the aromatic aldehyde compound of formula B,

   the formulae A3, B2, B3 being the following:

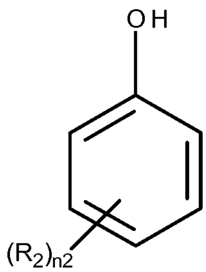

A3

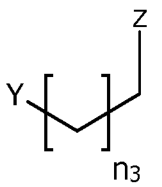

B2

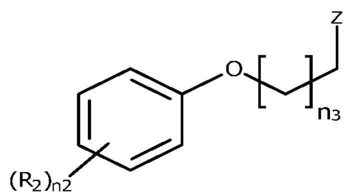

B3

4. The method as claimed in any one of claims 1 to 3, **characterized in that** the substituents $R_1$ and $R_2$ are chosen independently from one another from: -OH, -CHO, the groups -O-Alk wherein Alk denotes a substituted or unsubstituted alkyl chain of 1 to 4 carbon atoms, preferably -OMe, -COOH, and substituted or unsubstituted aryl groups optionally having one or more carbonyl or carboxylic acid functions,
   $R_2$ possibly also denoting a radical of formula A1 in formula A above or a radical of formula B1 in formula B above and $R_1$ possibly also denoting a radical of formula A2 in formula A above; in formulae A1, A2 and B1, $R_1$ and $R_2$ are as defined above in this claim.

5. The method as claimed in claim 4, **characterized in that** the substituents $R_1$ and $R_2$ are chosen independently from one another from: -OH, -CHO, -OMe wherein Me denotes a methyl group, and substituted or unsubstituted aryl groups optionally having one or more carbonyl or carboxylic acid functions.

6. The method as claimed in any one of claims 1 to 5, **characterized in that** $n_1$ is between 0 and 2 and $n_2$ is between 0 and 3 for formula A.

7. The method as claimed in any one of claims 1 to 5, **characterized in that** $n_2$ is between 0 and 3 and $n_3$ is between 1 and 3 for formula B.

**8.** The method as claimed in any one of claims 2 to 7, **characterized in that** the compound of formula A3 used for producing the aromatic aldehyde compound is chosen from: simple phenols, polyphenolic compounds, hydroxybenzoic aldehydes, hydroxybenzoic acids, hydroxybenzyl alcohols, hydroxycinnamyl alcohols, hydroxycinnamic acids, phenylpropenes, coumarins, naphthoquinones, stilbenoids, flavonoids, isoflavonoids, anthocyans, lignans, lignins, condensed tannins, hydrolyzable tannins, depolymerized tannins, and resol and novolac resins.

**9.** The method as claimed in claim 8, **characterized in that** the compound of formula A3 used for producing the aromatic aldehyde compound is chosen from: simple phenols and hydroxybenzoic aldehydes.

**10.** The method as claimed in either one of claims 8 and 9, **characterized in that** the compound of formula A3 used for producing the aromatic aldehyde compound is chosen from: phenol, pyrocatechol, resorcinol, hydroquinone, phloroglucinol, pyrogallol, guaiacol, syringol, bis-phenol A, bis-phenol S, para-hydroxybenzaldehyde, vanillin, syringaldehyde, dehydrodivanillin, 2-hydroxybenzyl alcohol, 4-hydroxybenzyl alcohol, vanillyl alcohol, syringyl alcohol, para-coumaryl alcohol, coniferyl alcohol, sinapyl alcohol, ferulic acid, para-hydroxybenzoic acid, gallic acid, para-coumaric acid, eugenol, isoeugenol, cardanols, cardols, anacardic acids, catechin, umbelliferone, juglone, trans-resveratrol, kaempferol, daidzein, delphinidol, enterodiol, lignins, procyanidins, gallotannins, condensed tannins, and resol and novolac resins.

**11.** A method according to any one of claims 1 to 10, wherein the nozzle is produced from a phenolic resin obtained by carrying out the pre-polymerization step or from a crosslinked phenolic resin obtained after carrying out a step wherein a heat treatment is carried out to crosslink phenolic resins obtained by carrying out the pre-polymerization step.

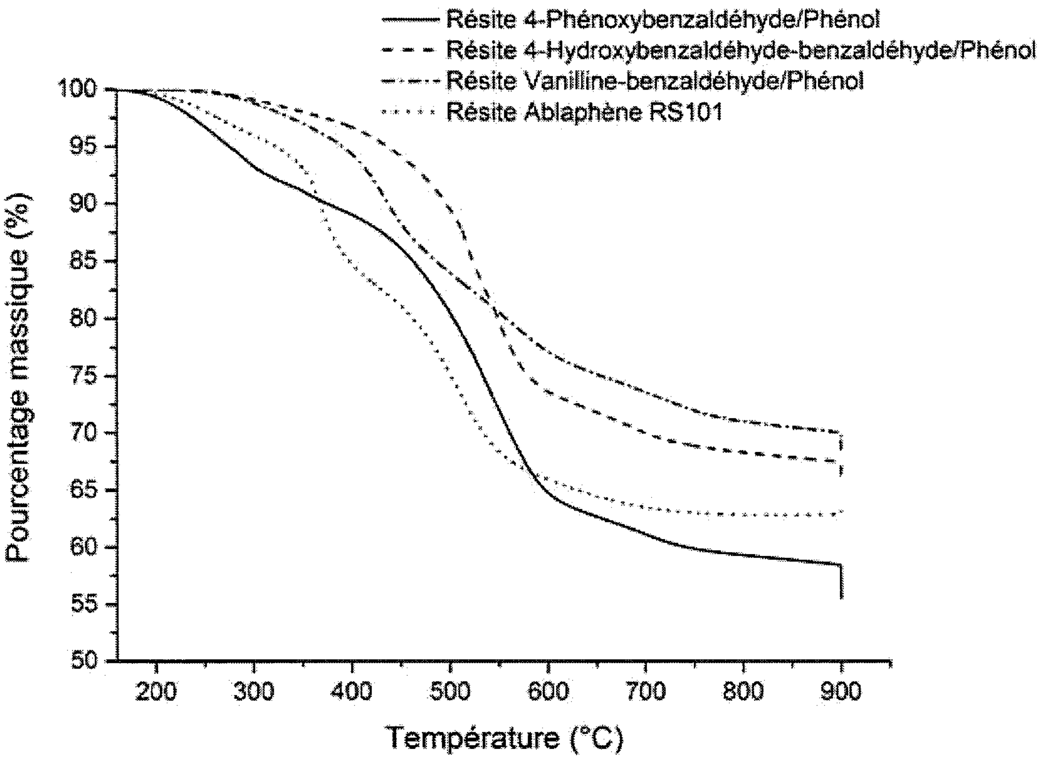
Résite 4-Phénoxybenzaldéhyde/Phénol
Résite 4-Hydroxybenzaldéhyde-benzaldéhyde/Phénol
Résite Vanilline-benzaldéhyde/Phénol
Résite Ablaphène RS101
Pourcentage massique (%)
100
95
90
85
80
75
70
65
60
55
50
200
300
400
500
600
700
800
900
Température (°C)

FIG.1

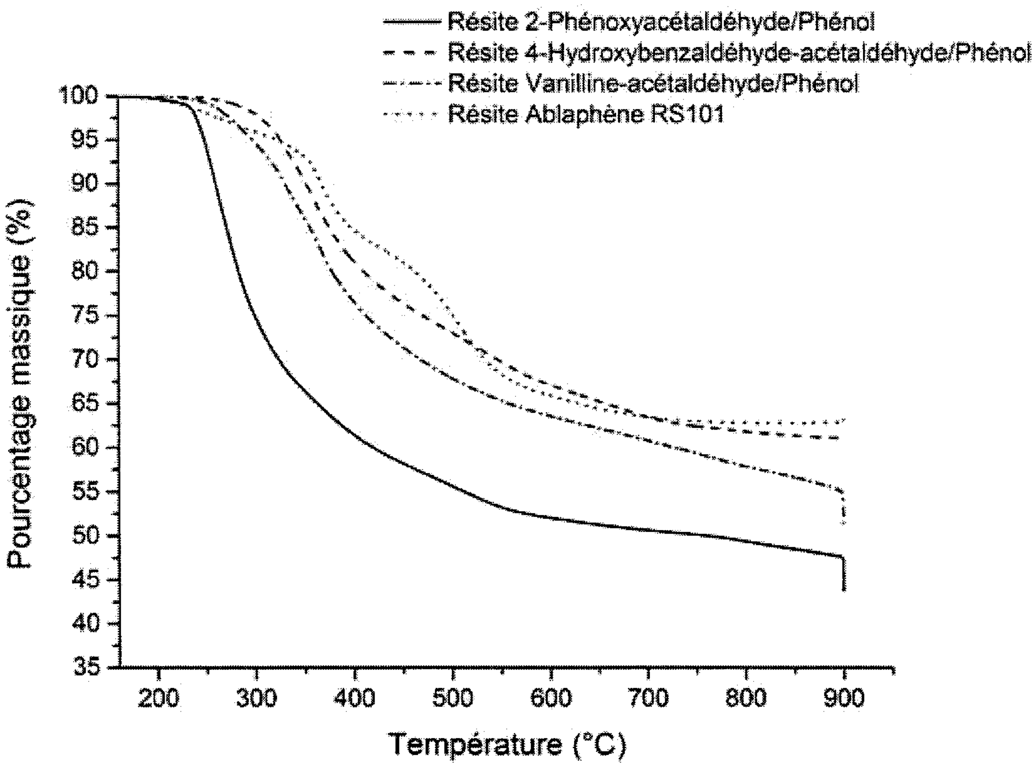
Résite 2-Phénoxyacétaldéhyde/Phénol
Résite 4-Hydroxybenzaldéhyde-acétaldéhyde/Phénol
Résite Vanilline-acétaldéhyde/Phénol
Résite Ablaphène RS101
Pourcentage massique (%)
100
95
90
85
80
75
70
65
60
55
50
45
40
35
200
300
400
500
600
700
800
900
Température (°C)

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **E.C. RAMIRES ; J.D. MEGIATTO ; C. GARDRAT ; A. CASTELLAN ; E. FROLLINI.** Biobased composites from glyoxal-phenolic resins and sisal fibers. *Bioresour. Technol.,* 2010, vol. 101, 1998-2006
- **L.H. BROWN.** Resin-forming reactions of furfural and phenol. *J. Ind. Eng. Chem.,* 1952, vol. 44, 2673-2675
- **M.B. HOCKING.** Vanillin: synthetic flavoring from spent sulfite liquor. *J. Chem. Educ.,* 1997, vol. 74, 1055-1059